# DEMANDE DE BREVET EUROPEEN

(11) **EP 4 123 857 A1**
(43) Date de publication de la demande: **25.01.2023**
(21) Numéro de dépôt: 22180571.6
(22) Date de dépôt: 22.06.2022
(51) Int. Cl.: H02G 11/02, B65H 49/32, B65H 75/40, B65H 75/44, B65D 85/04, B65H 49/08, B65H 49/16, B65H 75/36

(54) **BOITE À FIL ÉLECTRIQUE**

(30) Priorité: 21.07.2021 FR 2107873
(71) Demandeur: Nexans, 92400 Courbevoie (FR)
(72) Inventeur: BRIN, Julien, 69720 SAINT BONNET DE MURE (FR); GELABERTO, Joaquin, 08186 LLISSA D'AMUNT (ES); SANDQVIST, Kent, 514 32 TRANEMO (SE)
(74) Mandataire: Ipsilon

(57) **Abrégé**

L'invention se rapporte à une boite (1) à fil électrique ayant une forme parallélépipédique et étant délimitée par deux faces principales carrées (2, 3) et parallèles, ladite boite (1) comprenant une bobine autour (9) de laquelle est enroulé un fil électrique (10), au moins l'une des deux faces principales carrée (2, 3) de la boite (1) étant dotée d'une ouverture (8) pour permettre à une extrémité (12) dudit fil électrique (10) d'émerger de la boite (1).

Selon l'invention, l'ouverture (8) est délimitée par au moins un bord rectiligne (13, 14, 15, 16), de sorte qu'un opérateur en tirant sur l'extrémité émergeante du fil (10) pour faire sortir celui-ci de la boite (10) va engendrer une mise en contact dudit fil (10) avec le bord rectiligne (13, 14, 15, 16) qui va empêcher le fil (10) de se vriller ou de se torsader.

## Description

La présente invention concerne une boite à fil électrique.

Certains opérateurs sont amenés à installer des fils électriques dans un bâtiment pour réaliser des circuits électriques et ce, dans un environnement industriel, tertiaire ou résidentiel. Un tel bâtiment peut par exemple être représenté par une maison, un appartement ou faire partie d'un site industriel ou administratif.

La pose de ces fils électriques par cet opérateur est généralement effectuée au moyen d'une boite renfermant une bobine autour de laquelle est enroulé un fil électrique, ladite boite étant munie d'une ouverture par laquelle émerge une extrémité du fil électrique placé autour de la bobine. Afin de réaliser son installation électrique, l'opérateur se saisit alors de cette extrémité émergeante, puis tire sur le fil pour le faire sortir de la boîte avec la longueur voulue, et effectuer les raccordements électriques nécessaires.

Or, actuellement ces boites présentent un certain nombre d'inconvénients et/ou de limites :
- elles ne sont pas conçues pour empêcher un effet « queue de cochon » sur le fil électrique qui est tiré. En effet, lorsque l'on tire sur le fil pour l'extraire de la boite, ledit fil adopte une forme en hélice, en étant vrillé ou torsadé. Il est bien entendu qu'un fil présentant un tel profil entortillé ne peut pas être monté tel quel dans un circuit électrique, car il occuperait un espace important et risquerait également de se tordre encore plus, voire de se rompre,
- elles ne permettent pas de renseigner l'opérateur de façon simple, claire et précise sur la quantité de fil restant enroulé autour de la bobine dans la boite,
- dans le cas où l'opérateur souhaiterait installer simultanément au moins deux fils électriques placés dans deux boites différentes, lesdites boites demeurent dissociées l'une de l'autre, obligeant ledit opérateur à se livrer à des manipulations compliquées et contraignantes pour extraire les fils avec une longueur prédéfinie. L'installation électrique résultante risque alors de prendre beaucoup de temps et d'être de mauvaise qualité.

Les boites à fils électrique selon l'invention permettent de s'affranchir des inconvénients rencontrés dans l'état de la technique.

L'invention a pour objet une boite à fil électrique ayant une forme parallélépipédique et étant délimitée par deux faces principales carrées et parallèles, ladite boite comprenant une bobine autour de laquelle est enroulé un fil électrique, au moins l'une des deux faces principales carrée de la boite étant dotée d'une ouverture pour permettre à une extrémité dudit fil électrique d'émerger de la boite.

Selon l'invention, l'ouverture est délimitée par au moins un bord rectiligne, de sorte qu'un opérateur en tirant sur l'extrémité émergeante du fil pour faire sortir celui-ci de la boite va engendrer une mise en contact dudit fil avec le bord rectiligne qui va empêcher le fil de se vriller ou de se torsader. De cette manière, le fil électrique va sortir de la boite en présentant une certaine rectitude, lui permettant d'être immédiatement opérationnel. En effet, le fil n'aura pas à subir une manipulation de la part de l'opérateur, pour retrouver un profil relativement droit à partir d'une configuration vrillée ou torsadée. La boite est légère pour pouvoir être transportée facilement par un opérateur, et est préférentiellement réalisée en carton. En dehors de la présence de l'ouverture sur au moins l'une des deux faces principales carrées, la boite est fermée, lesdites deux surfaces principales carrées étant reliées l'une à l'autres par quatre parois de liaison s'étendant perpendiculairement audites deux parois principales carrées. Le fil enroulé autour de la bobine présente une superposition de plusieurs boucles définissant une épaisseur totale de fil autour de la bobine. Le fil électrique peut être nu ou être entouré d'une gaine isolante.

Selon une caractéristique possible de l'invention, l'ouverture est délimitée par au moins trois bords rectilignes. De cette manière, l'ouverture va contribuer à faire disparaitre de façon encore plus nette, l'effet « queue de cochon » entrevu lorsque l'opérateur tire sur le fil pour en extraire une certaine longueur de la boite.

Selon une caractéristique possible de l'invention, l'ouverture a une forme à choisir parmi un triangle, un losange, un carré et un rectangle. Toutes ces formes d'ouverture présentent une certaine efficacité pour faire disparaitre l'effet « queue de cochon », la forme la plus efficace demeurant la forme carrée.

Selon une caractéristique possible de l'invention, l'ouverture est placée au centre de la face principale carrée. Puisque la bobine est placée au centre de la boite, une ouverture en position centrale sur la paroi principale carrée parait la plus adaptée pour dérouler de façon fluide, le fil qui est enroulé autour de la bobine.

Selon une caractéristique possible de l'invention, seulement l'une des deux faces principales carrées est dotée d'une ouverture.

Selon une caractéristique possible de l'invention, au moins l'une des deux faces principales carrées présente au moins une fente traversante rectiligne et radiale, une surface externe de la face dans laquelle a été réalisée la fente comportant une graduation s'étendant le long de la fente et permettant de lire la quantité de fil restante enroulée autour de la bobine, en se focalisant sur la zone de la graduation correspondant à la limite matérialisant l'épaisseur maximale de fil restant enroulée autour de ladite bobine et qui apparait à travers la fente. La fente permet à l'opérateur de voir à travers celle-ci où se situe la limite matérialisant l'épaisseur maximale de fil demeurant enroulé autour de la bobine. Il suffit alors à l'opérateur de lire la graduation correspondant à cette limite pour savoir combien de fil reste enroulé autour de la bobine. La graduation peut comporter à intervalles réguliers, des chiffres, des lettres où des motifs indiquant, soit de façon précise la longueur de fil exacte demeurant enroulée autour de la bobine, soit de façon un peu moins précise la proportion de fil demeurant enroulée autour de ladite bobine. Pour faciliter l'évaluation de la longueur du fil restant enroulé autour de la bobine, la face principale carrée peut comporter plusieurs fentes.

Selon une caractéristique possible de l'invention, la fente est graduée en unité de distance, l'unité de distance correspondant à l'épaisseur maximale de fil restant enroulée autour de ladite bobine et qui apparait à travers la fente indiquant la longueur du fil enroulé autour de la bobine. La fente associée à la graduation possédant des unités de distance à intervalles réguliers constitue un indicateur précis permettant d'évaluer en un coup d'œil l'épaisseur de fil restant enroulé autour de la bobine.

Selon une caractéristique possible de l'invention, la fente est graduée en mètre. Préférentiellement, la graduation comprend plusieurs nombres : 0, 25, 50, 75, 100, 125, 150, 175 et 200m, séparés par des traits de graduation régulièrement espacés, permettant d'évaluer la quantité de fil demeurant enroulée autour de la bobine.

Selon une caractéristique possible de l'invention, la boite comprend des moyens de fixation et des moyens de fixation complémentaire, les moyens de fixation étant aptes à coopérer avec des moyens de fixation complémentaires d'une autre boite et les moyens de fixation complémentaires étant aptes à coopérer avec des moyens de fixation d'une autre boite, de manière à obtenir un ensemble résultant de boites stables. Avantageusement, les moyens de fixations sont représentés par un élément mâle et les moyens de fixation complémentaires sont représentés par un élément femelle, lesdits deux éléments étant dimensionnés de telle sorte que l'élément mâle puisse s'encliqueter dans l'élément femelle. A titre d'exemple non limitatif, chaque boite peut être dotée de deux éléments mâles placés sur deux bords opposés et deux éléments femelles placés sur deux autres bords opposés, de sorte que les éléments mâles soient alignés le long d'un axe qui est perpendiculaire à l'axe le long duquel sont alignés les deux éléments femelles.

L'invention a pour autre objet un ensemble d'au moins deux boites à fil électrique selon l'invention.

Selon l'invention, lesdites au moins deux boites sont accrochées l'une à l'autre au moyen d'une interaction entre les moyens de fixation de l'une des boites avec les moyens de fixation complémentaires de l'autre boite. Un tel ensemble présente une bonne cohésion et une certaine rigidité permettant à un opérateur de manipuler simplement cet ensemble sans avoir à se préoccuper de la disposition relative des boites les unes par rapport aux autres. L'opérateur peut ainsi se saisir de deux fils électriques à la fois, et les extraire des boites avec une bonne maitrise, par exemple, avec la même longueur. Préférentiellement, les faces principales carrées des deux boites et qui sont dotées de l'ouverture sont dans une parfaite continuité l'une de l'autre.

L'invention a pour autre objet un procédé d'utilisation d'une boite à fil électrique selon l'invention, ledit procédé comprenant les étapes suivantes :
- une étape initiale où un opérateur se saisit d'une extrémité du fil qui émerge de la boite à fil par l'ouverture,
- une étape de traction du fil par l'opérateur pour le faire sortir de la boite à fil en le déroulant de la bobine, cette étape de traction s'accompagnant d'une mise en contact dudit fil avec ledit au moins un bord rectiligne de l'ouverture qui va empêcher le fil de se vriller ou de se torsader,
- une étape de coupe du fil ainsi sorti de la boite à fil.

Une fois que l'opérateur a sorti la longueur de fil requise, il coupe le fil qui a un profil rectiligne pour le monter directement dans la partie d'une installation prévue à cet effet.

Une boite à fil électrique selon l'invention permet de rendre opérationnel le fil électrique qu'elle contient, grâce à une géométrie judicieuse de l'ouverture de ladite boite par laquelle ledit fil sera tiré. Il en résulte que cette boite contient cette fonctionnalité supplémentaire sans être plus encombrante et sans ajout de pièces supplémentaires. Elle a de plus l'avantage de pouvoir être fixée facilement et rapidement à au moins une autre boite pour permettre à un opérateur d'installer plusieurs fils électriques en même temps, cette fixation étant réalisée sans outil spécifique et sans manipulation contraignante. --

On donne ci-après, une description détaillée d'un mode de réalisation préféré d'une boite à fil électrique selon l'invention, en se référant aux figures suivantes :
[Fig. 1] représente une vue en perspective d'une boite à fil électrique selon l'invention,
[Fig. 2] représente une vue du dessus d'une boite à fil électrique selon l'invention.

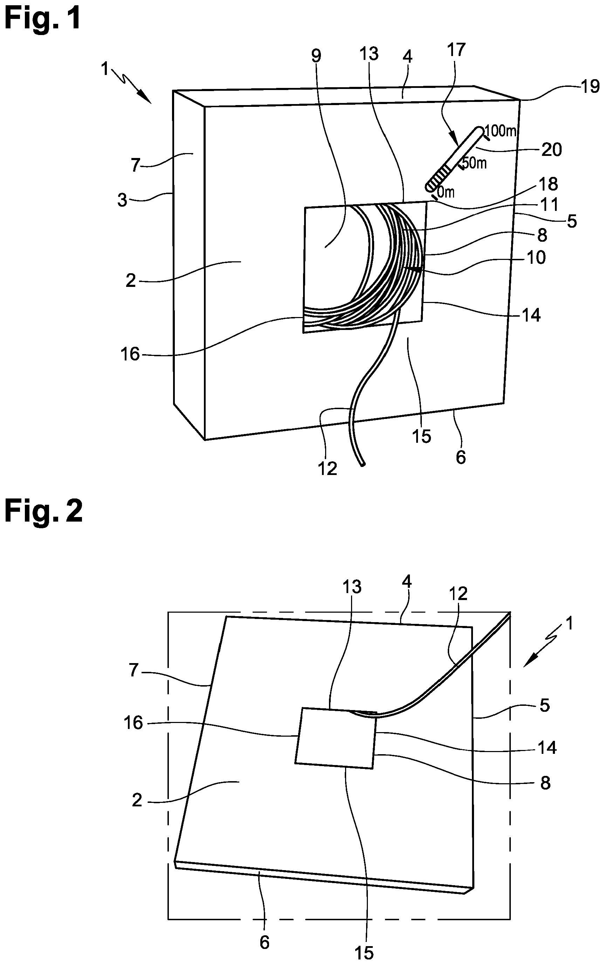

En se référant à la figure 1, une boite 1 à fil électrique selon l'invention est délimitée par deux parois principales carrées parallèles 2, 3 et par quatre parois 4, 5, 6, 7 de liaison, joignant lesdites deux parois principales carrées 2, 3 en étant perpendiculaires à celles-ci. Les quatre parois de liaison 4, 5, 6, 7 ont les mêmes dimensions et ont des surfaces qui sont inférieures à celles des faces principales carrées 2, 3, qui ont également les mêmes dimensions.

En se référant aux figures 1 et 2, l'une des deux faces principales carrées possède une ouverture centrale 8 de forme carrée. Cette boite 1 renferme une bobine 9 cylindrique, autour de laquelle est enroulé un fil électrique 10 doté d'une gaine externe 11 isolante. Ce fil électrique 10 est enroulé plusieurs fois autour de la bobine 9, et à chaque tour de la bobine 9, le fil 10 fait une boucle. De cette manière, les boucles du fil électrique 10 autour de ladite bobine 9 se superposent. En effet, des premières boucles s'enroulent directement autour de la bobine 8, des deuxièmes boucles de diamètre supérieur à celui des premières boucles se superposent auxdites premières boucles, des troisièmes boucles de diamètre supérieur à celui des deuxièmes boucles se superposent auxdites deuxièmes boucles, etc. La superposition de toutes les boucles autour de la bobine 9 définit une épaisseur résultante de fil 10 autour de ladite bobine 8. Une première extrémité du fil 10 est fixée à la bobine 9 et une deuxième extrémité 12 dudit fil 10 émerge de la boite 1 par l'ouverture 8 de forme carrée.

Un opérateur désireux d'installer du fil électrique 10 dans un équipement ou un circuit électrique d'un bâtiment, pouvant par exemple être une maison, un appartement, un bâtiment d'un site industriel ou d'un site public, va se saisir de l'extrémité 12 du fil 10 qui émerge de la boite 1 par l'ouverture carrée 8. Il va ensuite tirer sur cette extrémité 12 afin de dérouler le fil 10 de la bobine 9, jusqu'à atteindre la longueur souhaitée. Lorsque le fil 10 est déroulé de la bobine 9, il vient en appui contre les quatre bords 13, 14, 15, 16 de la face principale carrée 2 délimitant l'ouverture 8 de forme carrée. En venant en appui contre ces quatre bords rectilignes13, 14, 15, 16, le fil 10 en cours de débobinage n'est pas vrillé ou torsadé, et présente une certaine linéarité. Cette ouverture carrée empêche donc l'effet « queue de cochon » pour lequel le fil adopte un profil vrillé ou torsadé quand il est extrait de la boite 1. En effet, pour les boites existantes dans lesquelles l'ouverture est de forme circulaire, le fil 10 sort de la boite en étant légèrement vrillé ou torsadé. Il en résulte qu'un tel fil 10 n'est pas directement exploitable et qu'il faut donc le manipuler préalablement afin de lui redonner un profil plutôt linéaire.

En se référant à la figure 1, la face principale carrée 2 de la boite 1 possédant l'ouverture carrée 8 comprend au moins une fente 17 rectiligne et traversante. Cette fente 17 est disposée radialement par rapport à la bobine 9 de forme cylindrique et est séparée de l'ouverture carrée 8. Avantageusement, cette fente 17 radiale s'étend entre un coin 18 de l'ouverture carrée 9 et le coin 19 de la boite 1 situé le plus proche dudit coin 18 de l'ouverture carrée. Un opérateur peut ainsi voir à travers cette fente 17, l'épaisseur résultante du fil 10 autour de la bobine 9. Une graduation 20 est marquée le long de la fente 17 sur un bord de la face principale carrée 2 délimitant ladite fente 17. A titre d'exemple, cette graduation 20 peut faire ressortir plusieurs nombres : 0, 25, 50, 75, 100, 125, 150, 175 et 200m. La valeur « 0m » apparait à une extrémité de la fente 17 située la plus proche de l'ouverture carrée 8. La valeur « 200m » apparait à une extrémité de la fente 17 située la plus éloignée de l'ouverture carrée 8. La valeur intermédiaire « 100m » apparait au milieu de la fente 17. De cette manière, au moyen d'un simple coup d'œil vers la fente 17, un opérateur pourra rapidement évaluer la longueur de fil 10 qui lui reste en lisant ou en déduisant la valeur de la graduation correspondant à la limite matérialisant l'épaisseur résultante du fil 10 qu'il peut voir à travers la fente 17.

Bien que n'apparaissant pas sur les figures, la boite 1 comprend des moyens de fixation et des moyens de fixation complémentaire, les moyens de fixation étant aptes à coopérer avec des moyens de fixation complémentaires d'une autre boite, et les moyens de fixation complémentaires étant aptes à coopérer avec des moyens de fixation d'une autre boite, de manière à obtenir un ensemble résultant de boites stables. Les moyens de fixations peuvent par exemple être représentés par un élément mâle et les moyens de fixation complémentaires peuvent par exemple être représentés par un élément femelle, lesdits deux éléments étant dimensionnés de telle sorte que l'élément mâle puisse se clipser dans l'élément femelle. A titre d'exemple non limitatif, chaque boite peut être dotée de deux éléments mâles placés sur deux bords opposés, et de deux éléments femelles placés sur deux autres bords opposés, de sorte que les éléments mâles soient alignés le long d'un axe qui est perpendiculaire à l'axe le long duquel sont alignés les deux éléments femelles.

Un ensemble obtenu par fixation d'au moins deux boites 1 entre elles, peut être réalisé de sorte que les faces principales carrées 2 des deux boites 1 qui sont dotées de l'ouverture carrée 8, se retrouvent dans la parfaite continuité l'une de l'autre. Il devient alors aisé pour un opérateur de manipuler deux fils électriques différents et rangés dans deux boites différentes 1, pour les monter dans un bâtiment.

## Revendications

1. Boite (1) à fil électrique ayant une forme parallélépipédique et étant délimitée par deux faces principales carrées (2, 3) et parallèles, ladite boite (1) comprenant une bobine autour (9) de laquelle est enroulé un fil électrique (10), au moins l'une des deux faces principales carrée (2, 3) de la boite (1) étant dotée d'une ouverture (8) pour permettre à une extrémité (12) dudit fil électrique (10) d'émerger de la boite (1), **caractérisée en ce que** l'ouverture (8) est délimitée par au moins un bord rectiligne (13, 14, 15, 16), de sorte qu'un opérateur en tirant sur l'extrémité émergeante du fil (10) pour faire sortir celui-ci de la boite (10) va engendrer une mise en contact dudit fil (10) avec le bord rectiligne (13, 14, 15, 16) qui va empêcher le fil (10) de se vriller ou de se torsader.

2. Boite à fil électrique selon la revendication 1, **caractérisée en ce que** l'ouverture (8) est délimitée par au moins trois bords rectilignes (13, 14, 15, 16).

3. Boite à fil électrique selon la revendication 2, **caractérisée en ce que** l'ouverture (8) a une forme à choisir parmi un triangle, un losange, un carré et un rectangle.

4. Boite à fil électrique selon l'une quelconque des revendications 1 à 3, **caractérisée en ce que** l'ouverture (8) est placée au centre de la face principale carrée (2, 3).

5. ]Boite à fil électrique selon l'une quelconque des revendications 1 à 4, **caractérisée en ce que** seulement l'une (2) des deux faces principales carrées (2, 3) est dotée d'une ouverture (8).

6. Boite à fil selon l'une quelconque des revendications 1 à 5, **caractérisée en ce qu'**au moins l'une des deux faces principales carrées (2, 3) présente au moins une fente (17) traversante rectiligne et radiale, et **en ce qu'**une surface externe de la face (2, 3) dans laquelle a été réalisée la fente (17) comporte une graduation (20) s'étendant le long de la fente (17) et permettant de lire la quantité de fil (10) restante enroulée autour de la bobine (9), en se focalisant sur la zone de la graduation (20) correspondant à la limite matérialisant l'épaisseur maximale de fil (10) restant enroulée autour de ladite bobine (9) et qui apparait à travers la fente (17).

7. Boite à fil électrique selon la revendication 6, **caractérisée en ce que** la fente (17) est graduée en unité de distance, et **en ce que** l'unité de distance correspondant à l'épaisseur maximale de fil (10) restant enroulée autour de ladite bobine (9) et qui apparait à travers la fente (17) indique la longueur du fil (10) enroulé autour de la bobine (9).

8. Boite à fil électrique selon la revendication 7, **caractérisé en ce que** la fente est graduée en mètre.

9. Boite à fil électrique selon l'une quelconque des revendications 1 à 8, **caractérisée en ce qu'**elle comprend des moyens de fixation et des moyens de fixation complémentaire, et **en ce que** les moyens de fixation sont aptes à coopérer avec des moyens de fixation complémentaires d'une autre boite (1) et les moyens de fixation complémentaires sont aptes à coopérer avec des moyens de fixation d'une autre boite (1) de manière à obtenir un ensemble résultant de boites (1) stables.

10. Ensemble d'au moins deux boites (1) à fil électrique selon la revendication 9, **caractérisé en ce que** lesdites au moins deux boites (1) sont accrochées l'une à l'autre au moyen d'une interaction entre les moyens de fixation de l'une des boites (1) avec les moyens de fixation complémentaires de l'autre boite (1).

11. Procédé d'utilisation d'une boite (1) à fil électrique selon l'une quelconque des revendications 1 à 9, **caractérisé en ce qu'**il comprend les étapes suivantes :
- une étape initiale où un opérateur se saisit d'une extrémité du fil (10) qui émerge de la boite (1) à fil par l'ouverture (8),
- une étape de traction du fil (10) par l'opérateur pour le faire sortir de la boite (1) à fil en le déroulant de la bobine, cette étape de traction s'accompagnant d'une mise en contact dudit fil (10) avec ledit au moins un bord rectiligne (13, 14, 15, 16) de l'ouverture (8) qui va empêcher le fil (10) de se vriller ou de se torsader,
- une étape de coupe du fil (10) ainsi sorti de la boite (1) à fil.
